Europäisches Patentamt

European Patent Office

Office européen des brevets

(11) Veröffentlichungsnummer: **0 313 744 B1**

# EUROPÄISCHE PATENTSCHRIFT

(45) Veröffentlichungstag der Patentschrift: **10.03.93**

(51) Int. Cl.5: **G11B 7/09**

(21) Anmeldenummer: **88113301.1**

(22) Anmeldetag: **17.08.88**

(54) Fokussierungsverfahren für eine optische Abtastvorrichtung.

(30) Priorität: **30.09.87 DE 3732903**

(43) Veröffentlichungstag der Anmeldung:
**03.05.89 Patentblatt 89/18**

(45) Bekanntmachung des Hinweises auf die
Patenterteilung:
**10.03.93 Patentblatt 93/10**

(84) Benannte Vertragsstaaten:
**AT BE CH DE ES FR GB GR IT LI LU NL SE**

(56) Entgegenhaltungen:
**EP-A- 0 044 072**
**EP-A- 0 155 077**
**US-A- 3 952 191**

**XEROX DISCLOSURE JOURNAL, Band 7, Nr.
1, Januar/Februar 1982, Seite 25, Xerox Corp.,
Stamford, Connecticut, US; V. NOVOTNY et
al.: "AC focusing system for an optical disc"**

**IBM TECHNICAL DISCLOSURE BULLETIN,
Band 28, Nr. 12, Mai 1986, Seiten 5424-5425,
New York, US; "Automatic focus control for
head alignment"**

**PATENT ABSTRACTS OF JAPAN, Band 9, Nr.
120 (P-358)[1843], 24. Mai 1985; & JP-A-60**

5433

(73) Patentinhaber: **Deutsche Thomson-Brandt
GmbH
Hermann-Schwer-Strasse 3 Postfach 1307
W-7730 Villingen-Schwenningen(DE)**

(72) Erfinder: **Morimoto, Yasuaki
Tallardstrasse 20
W-7730 Villingen-Schwenningen(DE)**
Erfinder: **Zucker, Friedhelm
Frankenstrasse 5
W-7730 Villingen-Schwenningen(DE)**
Erfinder: **Schröder, Heinz-Jörg
Terra Wohnpark 9
W-7730 VS-Marbach(DE)**

**Beschreibung**

Die Erfindung betrifft ein Verfahren für eine optische Abtastvorrichtung, bei der ein von einem Laser mit Monitordiode erzeugter Laserstrahl mittels eines Fokusregelkreises auf einen optischen Aufzeichnungsträger fokussiert wird, bei der dem ersten Eingang eines Summationsverstärkers und dem ersten Eingang eines Multiplizierers ein periodisches Signal zugeführt wird, bei der der Ausgang des Multiplizierers mit dem Eingang eines Integrators verbunden ist, bei der der Ausgang des Integrators mit dem zweiten Eingang des Summationsverstärkers verbunden ist, bei der der Ausgang des Summationsverstärkers mit dem Stellglied des Fokusregelkreises verbunden ist und bei der der Istwert des Fokusregelkreises dem dritten Eingang des Summationsverstärkers zugeführt wird.

Aufbau und Funktion einer optischen Abtastvorrichtung, eines sogenannten optical-pick-ups, für einen CD-Spieler sind in Electronic Components & Applications, Vol. 6, No. 4, 1984 auf Seite 209 bis 214 beschrieben.

Aus der europäischen Patentanmeldung 0 044 072 ist ein Fokusregelkreis für ein Aufzeichnungs- und Wiedergabegerät bekannt, bei dem Daten mittels eines Lese-Lasers von einem optischen Aufzeichnungsträger lesbar und mittels eines Schreib-Lasers auf den optischen Aufzeichnungsträger aufzeichenbar sind.

Bei diesem Fokusregelkreis ist der Ausgang eines Summationsverstärkers, dessen erstem Eingang ein periodisches Signal eines Oszillators zugeführt wird, mit dem Stellglied des Fokusregelkreises - meist eine Spule, welche die Objektivlinse bewegt - verbunden. Das periodische Signal des Oszillators wird außerdem dem ersten Eingang eines Multiplizierers zugeführt, dessen Ausgang über einen Tiefpaß mit dem zweiten Eingang des Summationsverstärkers verbunden ist. Das Ausgangssignal des Fokusdetektors, der häufig als Fokusfehlersignal bezeichnete Istwert des Fokusregelkreises, wird dem dritten Eingang des Summationsverstärkers zugeführt, während das vom Laserstrahl abgetastete Datensignal, das oft auch als HF-Signal bezeichnet wird, dem zweiten Eingang des Multiplizierers über einen Detektor zur Feststellung des Tastverhältnisses, ein sogenannter Duty-Cycle-Detector, zugeführt wird. Dieser Fokusregelkreis fokussiert den Laserstrahl sehr genau auf den optischen Aufzeichnungsträger.

Um bei einer derartigen optischen Abtastvorrichtung eine genaue Fokussierung und Spurnachführung des Laserstrahls zu gewährleisten, sind aber insbesondere der Laser und der Fokusdetektor bei der Produktion genau zu justieren. Derartige Verfahren sind jedoch sehr aufwendig, denn sie erfordern viel Zeit und große Sorgfalt.

Ein weiterer Fokusregelkreis ist aus US-A- 3 952 191 bekannt. In diesem Regelkreis wird aus dem gelesenen Datensignal ein Hüllkurvensignal gewonnen, welches mit zur Ansteuerung der Fokussierungseinrichtung verwendet wird.

Es ist Aufgabe der Erfindung, ein Verfahren für eine optische Abtastvorrichtung gemäß Oberbegriff des Anspruchs 1 anzugeben, das die Justierarbeiten für den Laser und den Fokusdetektor wesentlich vereinfacht.

Eine erste Lösung der Erfindung ist darin zu sehen, daß die Lichtleistung des Lasers auf einen konstanten Wert geregelt wird, daß das Regelsignal zur Regelung des Lasers dem zweiten Eingang des Multiplizierers zugeführt wird, daß der Regler für den Laser schnell im Vergleich zur Frequenz des periodischen Signals arbeitet und daß die Eingänge des Summationsverstärkers Additionseingänge sind.

Eine zweite Lösung der Erfindung sieht vor, daß bei konstantem Laserstrom das Ausgangssignal der Monitordiode des Lasers dem zweiten Eingang des Multiplizierers zugeführt wird, daß der Regler für den Laser langsam im Vergleich zur Frequenz des periodischen Signals arbeitet und daß es sich beim ersten und dritten Eingang des Summationsverstärkers um Additionseingänge handelt, während der zweite Eingang des Summationsverstärkers ein invertierender Eingang ist.

Es zeigen

Figur 1    die erste Lösung der Erfindung gemäß Anspruch 1

Figur 2    die zweite Lösung der Erfindung gemäß Anspruch 2

Figur 3    den Laserstrom in Abhängigkeit von der Fokussierung, das Ausgangssignal des Verstärkers und des Frequenzgenerators

Figur 4    das Ausgangssignal der Monitordiode in Abhängigkeit von der Fokussierung, das Ausgangssignal des Verstärkers und des Frequenzgenerators.

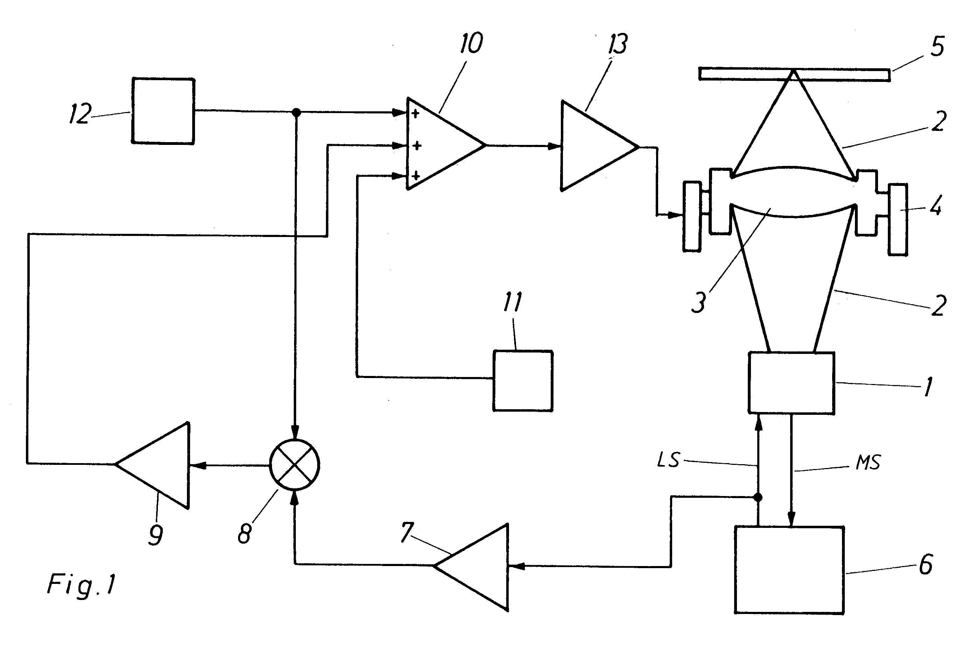

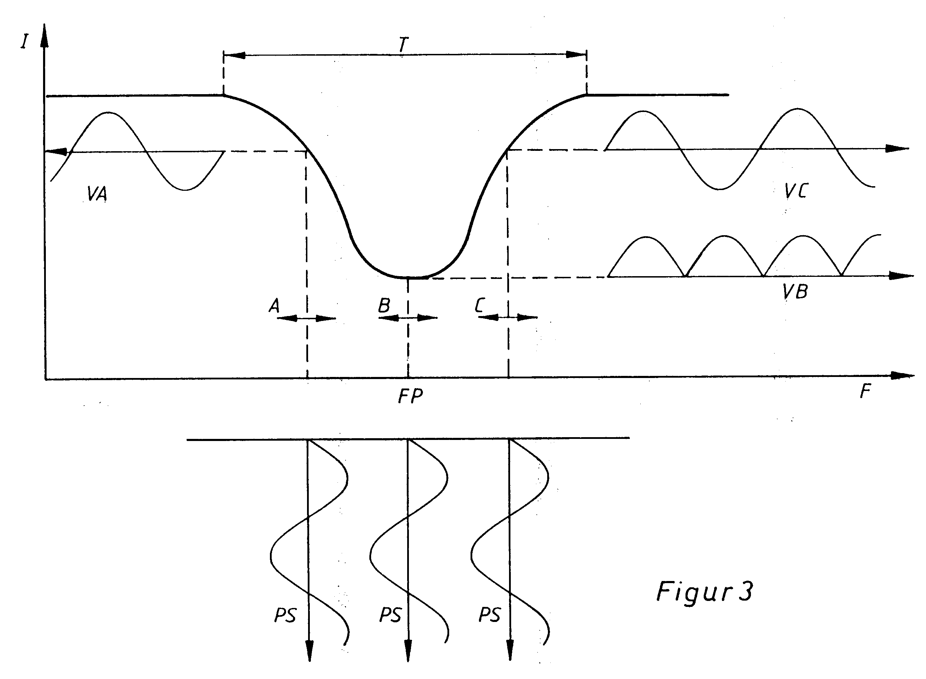

Es wird nun die Erfindung zunächst anhand der Figur 1 beschrieben und mit Hilfe der Figur 3 erläutert.

Die von einem Laser 1 ausgesendeten Laserstrahlen 2 werden mittels einer Linse 3 und eines Stellgliedes 4 auf einen Aufzeichnungsträger, eine CD-Platte 5, fokussiert. Die Lichtleistung des Lasers 1 wird von einem Regler 6 auf einen konstanten Wert geregelt, weil die Laserkennlinie temperaturabhängig ist. Das Regelsignal für den Laser 1 gelangt vom Regler 6 über einen Verstärker 7 an den ersten Eingang eines Multiplizierers 8, dessen Ausgang mit dem Eingang eines Integrators 9 verbunden ist. Der Ausgang eines Frequenzgenerators 12, der das periodische Signal PS erzeugt, das dem Fokusregelkreis aufgeprägt wird, ist mit dem zweiten Eingang des Multiplizierers 8 und dem ersten Eingang eines Summationsverstärkers 10 verbunden. Der Ausgang des Integrators 9 ist mit dem zweiten Eingang des Summationsverstärkers 10 verbunden, dessen dritter Eingang mit dem Fokusdetektor 11 verbunden ist, der den Istwert, das Fokusfehlersignal, für den Fokusregelkreis erzeugt. Der Ausgang des Summationsverstärkers 10 ist mit dem Eingang eines Servoverstärkers 13 verbunden, dessen Ausgang mit dem Stellglied 4 des Fokusregelkreises verbunden ist.

Wenn der Laserstrahl 2 genau auf die CD-Platte 5 fokussiert ist, wird er in sich selbst reflektiert. In diesem Fall, wenn der Laserstrahl 2 in sich selbst reflektiert wird, steigt die Lichtleistung des Lasers 1 an; jedoch wird bei der ersten Lösung die Lichtleistung des Lasers 1 mittels des Reglers 6 auf einen konstanten Wert geregelt, weil der Regler 6 für den Laserstrom im Verhältnis zur Frequenz des periodischen Signals PS schnell reagiert. Mit anderen Worten ausgedrückt bedeutet dies, daß der Regler 6 die vom periodischen Signal PS verursachte Änderung der Lichtleistung des Lasers 1 durch Ändern des Laserstroms ausregelt. Daher wird der Laserstrom bei genauer Fokussierung verringert, um die Lichtleistung des Lasers 1 auf einem konstanten Wert zu halten.

In der Figur 3 ist der Laserstrom I in Abhängigkeit von der Fokussierung F angegeben. Bei genauer Fokussierung FP nimmt der Laserstrom I ein Minimum an. Links von diesem Minimum ist die fokussierende Linse 3 zu weit vom optischen Aufzeichnungsträger 5 entfernt, rechts davon liegt sie dagegen zu nahe am Aufzeichnungsträger 5. Durch die Pfeile A, B und C ist angedeutet, in welchen Bereichen das Stellglied 4 die fokussierende Linse 3 infolge des periodischen Signals PS bewegt.

Es wird zunächst der Fall A betrachtet, in welchem annähernd fokussiert ist, die fokussierende Linse 3 aber noch zu weit vom Aufzeichnungsträger 5 entfernt ist. Das Ausgangssignal VA des Verstärkers 7 hat die gleiche Frequenz wie das periodische Signal PS des Frequenzgenerators 12, ist aber gegenphasig zum periodischen Signal PS. An der Gegenphasenlage erkennt der Fokusregelkreis, daß das Stellglied 4 die fokussierende Linse 3 näher zum Aufzeichnungsträger 5 hin bewegen muß, um den Punkt FP der genauen Fokussierung zu erreichen. Das Signal am Ausgang des Multiplizierers 8 bewirkt mittels des Summationsverstärkers 10, daß die Linse 3 zum Aufzeichnungsträger 5 hin bewegt wird. Beim Überstreichen der genauen Fokussierung FP nimmt das Ausgangssignal VB des Verstärkers 7 den in Figur 3 gezeichneten Verlauf an. Das Ausgangssignal VB hat jetzt die doppelte Frequenz wie das periodische Signal PS. Weil wegen der doppelten Frequenz des Signals FB das Signal am Ausgang des Integrators 9, das Integral des Produktes aus den Signalen PS und VB, einen konstanten Wert annimmt, verursacht es über den Summationsverstärker 10 keine zusätzlichen Bewegungen der fokussierenden Linse 3 mehr. Es ist jetzt optimal fokussiert.

Es wird nun der Fall C erläutert, in welchem wie im Fall A annähernd fokussiert ist, die fokussierende Linse 3 sich jedoch zu nahe am Aufzeichnungsträger 5 befindet. Das Signal VC am Ausgang des Verstärkers 7 hat die gleiche Frequenz wie das periodische Signal PS und ist in Phase mit ihm. Daran erkennt der Fokusregelkreis, daß sich die Linse 3 zu nahe am Aufzeichnungsträger 5 befindet. Das Signal am Ausgang des Integrators 9 bewirkt nun, daß die Linse 3 gerade so weit vom Aufzeichnungsträger 5 weg bewegt wird, bis beim Überstreichen der genauen Fokussierung FP das Signal am Ausgang des Integrators 9 konstant bleibt.

Ohne den Integrator 9, den Multiplizierer 8 und den Verstärker 7 kann der Fokusregelkreis die fokussierende Linse 3 nur in den mit T bezeichneten Toleranzbereich bringen. Eine genaue Fokussierung innerhalb dieses Toleranzbereiches T ist aber nur möglich, weil einem Eingang des Summationsverstärkers 10 das Ausgangssignal des Integrators 9 zugeführt wird.

Das Fokusfehlersignal FE ist in einem bestimmten Bereich proportional zur Abweichung von der optimalen Fokussierung. Die Intensität P des vom optischen Aufzeichnungsträger 5 reflektierten Lichts kann durch eine Taylor-Entwicklung beschrieben werden.

$$P_r = P_o - \sum_{i=2}^{\infty} P_i \Delta^i \approx P_o - P_2 \Delta^2$$

Der Laserstrom I wird dann annähernd zu:

$$I = I_o + I_2 \Delta^2$$

wobei $I_o$ der Normalstrom ist.

3

Wenn dem Fokusregelkreis nun das periodische Signal aufgeprägt wird, lautet die Formel für das Fokusfehlersignal:

$$FE' = FE + f_0 \sin\Omega t$$

Der Abtaster bewegt sich deshalb um die Wegstrecke

$$\Delta = \Delta_0 + \Delta_1 \sin\Omega t$$

$\Delta_0$ ist die Abweichung von der optimalen Brennpunktposition.
$\Delta_1$ ist die Wegamplitude bei der Modulation mit $f_0$.
Der Laserstrom wird dann durch folgende Gleichung beschrieben:

$$I = I_0 + I_2(\Delta_0^2 + 2\Delta_0\Delta_1 \sin\Omega t + \Delta_1^2 \sin^2\Omega t)$$

Ein Lockin-Verstärker bildet daraus das folgende Integral, wenn

$$\tau >> \frac{1}{\Omega} :$$

$$L = \frac{1}{\tau} \int_{t=-\frac{\tau}{2}}^{t=+\frac{\tau}{2}} [I_0 + I_2(\Delta_0^2 + 2\Delta_0\Delta_1 \sin\Omega t + \Delta_1^2 \sin^2\Omega t)] \sin\Omega t \cdot dt =$$

$$= \frac{1}{\tau} \int_{t=-\frac{\tau}{2}}^{t=+\frac{\tau}{2}} [I_0 + I_2(\Delta_0^2 + \Delta_1 \sin^2\Omega t)] \sin\Omega t \cdot dt +$$

$$+ \frac{1}{\tau} \int_{t=-\frac{\tau}{2}}^{t=+\frac{\tau}{2}} \Delta_0\Delta_1 (1 - \cos 2\Omega t) \cdot dt = \Delta_0\Delta_1$$

denn bei hinreichend großer Integrationszeit kann das Integral gelöst und nach geraden und ungeraden Potenzen geordnet werden. Der Wert ist proportional zur Abweichung von der optimalen Brennpunktposition.

Weil mittels des Integrators 9 das beschriebene Integral gelöst wird, bewirkt der Summationsverstärker 10, daß das Stellglied 4 die fokussierende Linse 3 in weiten Grenzen unabhängig davon, wie genau der Laser 1 und der Fokusdetektor 11 justiert sind, in die optimale Brennpunktposition bringt. Um diese Brennpunktposition als Mittellage arbeitet der Fokusregelkreis symmetrisch. Dagegen ist bei dem Fokusregelkreis aus der genannten europäischen Patentanmeldung 0 044 072 eine genaue Justierung des Fokusdetektors nötig, um eine genaue Fokussierung des Laserstrahls zu erzielen.

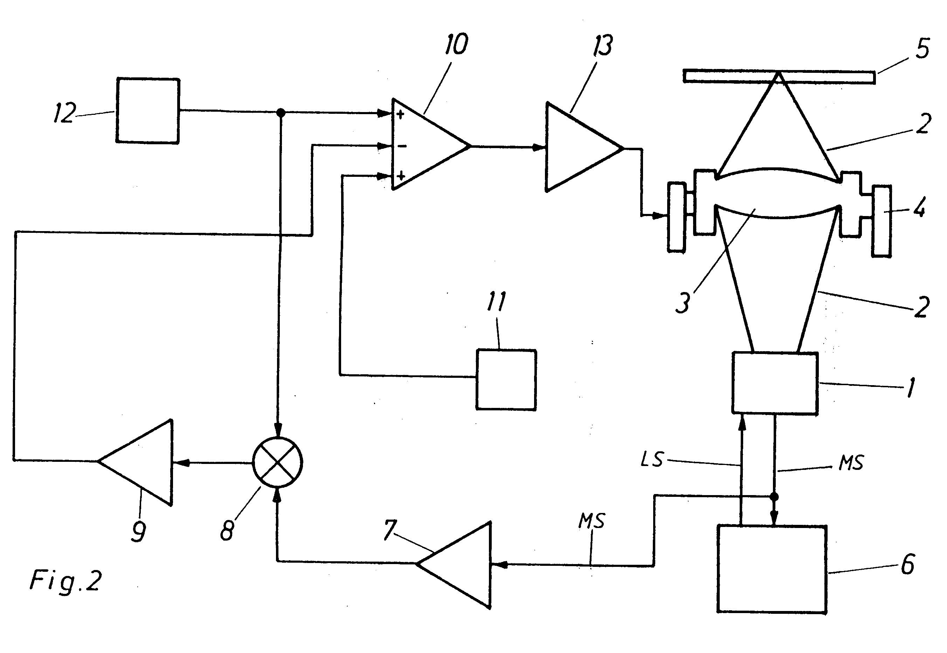

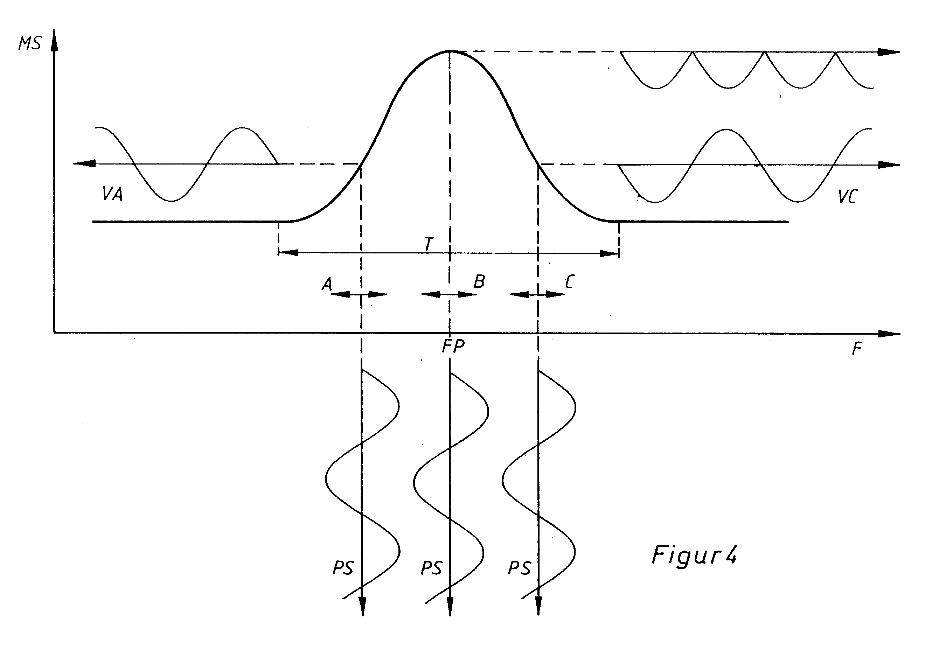

Es wird nun die in Figur 2 dargestellte zweite erfindungsgemäße Lösung beschrieben und an Hand der Figur 4 erläutert.

Die in Figur 2 gezeigte Schaltungsanordnung unterscheidet sich von der Schaltungsanordnung aus Figur 1 dadurch, daß bei konstantem Laserstrom dem zweiten Eingang des Multiplizierers 8 das Ausgangssignal MS der Monitordiode des Lasers 1 zugeführt wird und daß der zweite Eingang des Summationsverstärkers 10, dem das Ausgangssignal des Integrators 9 zugeführt wird, als Subtraktionseingang ausgebildet ist. Bei genauer Fokussierung des Laserstrahls steigt anstelle des Laserstroms, der im Gegensatz zur ersten erfindungsgemäßen Lösung konstant gehalten wird, das Ausgangssignal der Monitordiode des Lasers 1 an, weil der Regler 6 für die Laserleistung im Verhältnis zur Frequenz des periodischen Signals PS langsam reagiert. Der Regler 6 regelt daher die vom periodischen Signal PS verursachten schnellen Schwankungen in der Lichtleistung des Lasers 1 nicht aus, sondern hält den Laserstrom auf einem konstanten Wert. Deshalb ist bei konstanter Lichtleistung dem zweiten Eingang des Multiplizierers 8 das Regelsignal LS für den Laser 1 zuzuführen, während bei konstantem Laserstrom das Ausgangssignal MS der Monitordiode dem zweiten Eingang des Multiplizierers 8 zuzuführen ist.

In der Figur 4 ist das Ausgangssignal MS der Monitordiode des Lasers 1 in Abhängigkeit von der Fokussierung F dargestellt. Bei genauer Fokussierung FP nimmt das Ausgangssignal MS der Monitordiode ein Maximum an. Wie in Figur 3 ist durch die Pfeile A, B und C angedeutet, in welchen Bereichen das Stellglied 4 die fokussierende Linse 3 infolge des periodischen Signals PS bewegt.

Es wird nun zunächst der Fall A betrachtet, in welchem zwar annähernd fokussiert ist, die fokussierende Linse 3 aber noch zu weit vom Aufzeichnungsträger 5 entfernt ist. Das Ausgangssignal VA des Verstärkers 7 hat die gleiche Frequenz wie das periodische Signal PS des Frequenzgenerators 12 und ist mit ihm in Phase. Das Signal am Ausgang des Integrators 9 bewirkt daher mittels des Summationsverstärkers 10, daß die Linse 3 so weit zum Aufzeichnungsträger hin bewegt wird, bis sich das Signal am Ausgang des Integrators 9 nicht mehr ändert. Dies ist bei der genauen Fokussierung FP der Fall. Das Ausgangssignal VB des Verstärkers 7 nimmt den in Figur 4 gezeichneten Verlauf an. Es hat die doppelte Frequenz wie das periodische Signal PS. Weil wegen der doppelten Frequenz des Signals VB das Signal am Ausgang des Integrators, das Integral des Produktes aus den Signalen PS und VB, konstant ist, verursacht es über den Summationsverstärker 10 keine zusätzlichen Bewegungen der fokussierenden Linse 3 mehr. Es ist jetzt optimal fokussiert.

Es wird schließlich noch der Fall C erläutert, in welchem wie im Fall A annähernd fokussiert ist, die fokussierende Linse 3 sich jedoch zu nahe am Aufzeichnungsträger 5 befindet. Das Signal VC am Ausgang des Verstärkers 7 hat die gleiche Frequenz wie das periodische Signal PS, ist aber gegenphasig zu ihm. Daher bewirkt das Signal am Ausgang des Integrators 9, daß die Linse 3 gerade so weit vom Aufzeichnungsträger 5 weg bewegt wird, bis beim Überstreichen der genauen Fokussierung FP das Signal am Ausgang des Integrators 9 einen konstanten Wert annimmt.

Auch bei der zweiten erfindungsgemäßen Lösung kann ohne den Integrator 9, den Multiplizierer 8 und den Verstärker 7 der Fokusregelkreis die fokussierende Linse 3 nur in dem mit T bezeichneten Toleranzbereich bringen. Eine genaue Fokussierung innerhalb dieses Toleranzbereiches T ist daher nur möglich, weil einem Eingang des Summationsverstärkers 10 das Ausgangssignal des Integrators 9 zugeführt wird.

Die Erfindung ist für CD-Spieler, Videoplattenspieler, DRAW-DISC-Spieleroder magneto-optische Geräte geeignet.

## Patentansprüche

1. Verfahren zum Betrieb einer optischen Abtastvorrichtung, bei der ein von einem Laser (1) mit Monitordiode erzeugter Laserstrahl (2) mittels eines Fokusregelkreises auf einen optischen Aufzeichnungsträger (5) fokussiert wird, bei der dem ersten Eingang eines Summationsverstärkers (10) und dem ersten Eingang eines Multiplizierers (8) ein periodisches Signal (PS) zugeführt wird, bei der der Ausgang des Multiplizierers (8) mit dem Eingang eines Integrators (9) verbunden ist, bei der der Ausgang des Integrators (9) mit dem zweiten Eingang des Summationsverstärkers (10) verbunden ist, bei der der Ausgang des Summationsverstärkers (10) mit dem Stellglied (4) des Fokusregelkreises verbunden ist und bei der der Istwert des Fokusregelkreises dem dritten Eingang des Summationsverstärkers (10) zugeführt wird, **dadurch gekennzeichnet,** daß die Lichtleistung des Lasers (1) auf einen konstanten Wert geregelt wird, daß das Regelsignal (LS) zur Regelung des Lasers (1) dem zweiten Eingang des Multiplizierers (8) zugeführt wird, daß der Regler (6) für den Laser (1) schnell im Vergleich zur Frequenz des periodischen Signals (PS) arbeitet und daß die Eingänge des Summationsverstärkers (10) Additionseingänge sind.

2. Verfahren zum Betrieb einer optischen Abtastvorrichtung, bei der ein von einem Laser mit Monitordiode (1) erzeugter Laserstrahl (2) mittels eines Fokusregelkreises auf einen optischen Aufzeichnungsträger (5) fokussiert wird, bei der dem ersten Eingang eines Summationsverstärkers (10) und dem ersten Eingang eines Multiplizierers (8) ein periodisches Signal (PS) zugeführt wird, bei der der Ausgang des Multiplizierers (8) mit dem Eingang eines Integrators (9) verbunden ist, bei der der Ausgang des Integrators (9) mit dem zweiten Eingang des Summationsverstärkers (10) verbunden ist, bei der der Ausgang des Summationsverstärkers (10) mit dem Stellglied (4) des Fokusregelkreises verbunden ist und bei der der Istwert des Fokusregelkreises dem dritten Eingang des Summationsverstärkers (10) zugeführt wird, **dadurch gekenzeichnet**, daß bei konstantem Laserstrom das Ausgangssignal (MS) der Monitordiode des Lasers (1) dem zweiten Eingang des Multiplizierers (8) zugeführt wird, daß der Regler (6) für den Laser (1) langsam im Vergleich zur Frequenz des periodischen Signals (PS) arbeitet und daß es sich beim ersten und dritten Eingang des Summationsverstärkers (10) um Additionseingänge handelt, während der zweite Eingang des Summationsverstärkers (10) ein invertierender Eingang ist.

## Claims

1. Method for driving an optical scanning device in which a laser beam (2) produced by a laser (1) with monitor diode is focused by means of a focusing control loop on an optical recording medium (5), in which a periodic signal (PS) is supplied to the first input of a summing amplifier (10) and to the first input of a multiplier (8), in which the output of the multiplier (8) is connected to the input of an integrator (9), in which the output of the integrator (9) is connected to the second input of the summing amplifier (10), in which the output of the summing amplifier (10) is connected to the adjusting member (4) of the focusing control loop and in which the current value of the focusing control loop is supplied to the third input of the summing amplifier (10), characterised in that, the luminous power of the laser (1) is controlled at a constant value, that the control signal (LS) for the control of the laser (1) is supplied to the second input of the multiplier (8), that the regulator (6) for the laser (1) operates rapidly in comparison with the frequency of the periodic signal (PS) and that the inputs of the summing amplifier (10) are summing inputs.

2. Method for driving an optical scanning device in which a laser beam (2) produced by a laser with monitor diode (1) is focused by means of a focusing control loop on an optical recording medium (5), in which a periodic signal (PS) is supplied to the first input of a summing amplifier (10) and to the first input of a multiplier (8), in which the output of the multiplier (8) is connected to the input of an integrator (9), in which the output of the integrator (9) is connected to the second input of the summing amplifier (10), in which the output of the the summing amplifier (10) is connected to the adjusting member (4) of the focusing control loop and in which the current value of the focusing control loop is supplied to the third input of the summing amplifier (10), characterised in that, for constant laser current, the output signal (MS) of the monitor diode of the laser (1) is supplied to the second input of the multiplier (8), that the regulator (6) for the laser (1) operates slowly in comparison with the frequency of the periodic signal (PS) and that the first and third inputs of the summing amplifier (10) are summing inputs while the second input of the summing amplifier (10) is an inverting input.

**Revendications**

1. Procédé pour le fonctionnement d'un dispositif d'exploration optique dans lequel un rayon laser (2) produit par un laser (1) avec une diode de contrôle est focalisé au moyen d'un circuit de réglage de foyer sur un support d'enregistrement optique (5), dans lequel un signal périodique est amené à la première entrée d'un amplificateur d'addition (10) et à la première entrée d'un multiplicateur (8), dans lequel la sortie du multiplicateur (8) est reliée à l'entrée d'un intégrateur (9), dans lequel la sortie de l'intégrateur (9) est reliée à la seconde entrée de l'amplificateur d'addition (10), dans lequel la sortie de l'amplificateur d'addition (10) est reliée au composant de réglage (4) du circuit de réglage de foyer et dans lequel la valeur réelle du circuit de réglage de foyer est amenée à la troisième entrée de l'amplificateur d'addition (10), **caractérisé en ce** que le flux lumineux du laser (1) est réglé à une valeur constante, que le signal de réglage (LS) pour le réglage du laser (1) est amené à la seconde entrée du multiplicateur (8), que le régulateur (6) pour le laser (1) fonctionne rapidement par comparaison avec la fréquence du signal périodique (PS) et que les entrées de l'amplificateur d'addition (10) sont des entrées d'addition.

2. Procédé pour le fonctionnement d'un dispositif d'exploration optique dans lequel un rayon laser (2) produit par un laser (1) avec une diode de contrôle est focalisé au moyen d'un circuit de réglage de foyer sur un support d'enregistrement optique (5), dans lequel un signal périodique est amené à la première entrée d'un amplificateur d'addition (10) et à la première entrée d'un multiplicateur (8), dans lequel la sortie du multiplicateur (8) est reliée à l'entrée d'un intégrateur (9), dans lequel la sortie de l'intégrateur (9) est reliée à la seconde entrée de l'amplificateur d'addition (10), dans lequel la sortie de l'amplificateur d'addition (10) est reliée au composant de réglage (4) du circuit de réglage de foyer et dans lequel la valeur réelle du circuit de réglage de foyer est amenée à la troisième entrée de l'amplificateur d'addition (10), **caractérisé en ce que**, pour un courant laser constant, le signal de sortie (MS) de la diode de contrôle du laser (1) est amené à la seconde entrée du multiplicateur (8), que le régulateur (6) pour le laser (1) fonctionne lentement par comparaison avec la fréquence du signal périodique (PS) et qu'il s'agit pour la première et la troisième entrée de l'amplificateur d'addition (10) d'entrées d'addition, tandis que la seconde entrée de l'amplificateur d'addition (10) est une entrée d'inversion.

Fig.1

EP 0 313 744 B1

Fig.2

EP 0 313 744 B1

Figur 3

Figur 4

EP 0 313 744 B1